Europäisches Patentamt

European Patent Office

Office européen des brevets

(19)

(11) Veröffentlichungsnummer: **0 158 797**
A2

(12) **EUROPÄISCHE PATENTANMELDUNG**

(21) Anmeldenummer: **85102155.0**

(22) Anmeldetag: **27.02.85**

(51) Int. Cl.⁴: **G 05 B 19/16**

(30) Priorität: **23.03.84 DE 3410683**

(43) Veröffentlichungstag der Anmeldung:
**23.10.85 Patentblatt 85/43**

(84) Benannte Vertragsstaaten:
**CH FR GB IT LI SE**

(71) Anmelder: **Heidelberger Druckmaschinen Aktiengesellschaft**
**Kurfürsten-Anlage 52-60 Postfach 10 29 40**
**D-6900 Heidelberg 1(DE)**

(72) Erfinder: **Rodi, Anton**
**Karlsruher-Strasse 12**
**D-6906 Leimen 3(DE)**

(72) Erfinder: **Lange, Peter**
**Nelkenstrasse 9**
**D-6901 Mauer(DE)**

(74) Vertreter: **Stoltenberg, Baldo Heinz-Herbert**
**c/o Heidelberger Druckmaschinen AG Kurfürsten-Anlage 52-60**
**D-6900 Heidelberg 1(DE)**

(54) Datenübertragungsystem zur Vereinstellung von Stellgliedern an Druckmaschinen.

(57) In einem Datenübertragungssystem zur Voreinstellung von Stellgliedern (22-25) an Druckmaschinen ist zwischen einem mit der Druckmaschine verbundenen elektronischen Rechnersystem (7) und einer Datenaufzeichnungs- und Wiedergabevor-richtung (9) mit einem Sammelauftragsspeicher (10) ein Datenverteiler (1) angeordnet, dessen Kernstück eine elektronische Weiche (26) bildet. Über eine Steuerlogik (2) ist die elektronische Weiche (26) in verschiedene Weichenstellungen verfahrbar, wodurch ein allseitiger und richtungsunabhängiger Datenverkehr zwischen einzelnen oder mehreren Systemkomponenten möglich ist. Zuordnung und Richtung des Datenflusses von und zum Sammelauftragsspeicher (10) sind durch die jeweilige Weichenstellung bestimmt. Über eine mit dem Datenverteiler (1) gekoppelte Tastatur (11) lassen sich Kenndaten, z.B. Datum, Auftragsnamen und -nummer in Form eines Inhaltsverzeichnisses in den Sammelauftragsspeicher (10) eingeben und auf einer Anzeige (12) darstellen. Danach können die zwischengespeicherten Maschineneinstellwerte der Stellglieder (22-25) in normierter Form auf dem Sammelauftragsspeicher (10) aufgezeichnet und bei Wiederholaufträgen zur Ansteuerung der Stellglieder (22-25) zwecks deren Voreinstellung anhand des Inhaltverzeichnisses entnormiert wieder abgerufen werden. Dadurch wird die Datenspeicherung einer Vielzahl von Druckaufträgen verschiedener Druckmaschinen unterschiedlicher Bauarten auf einem Speichermedium ermöglicht.

Fig. 1

EP 0 158 797 A2

Die Erfindung betrifft ein Datenübertragungssystem zur Voreinstellung von Stellgliedern an Druckmaschinen mit zumindest einem elektronischen Rechnersystem und zumindest einem internen Speicher sowie einer Datenaufzeichnungs- und Wiedergabevorrichtung zur Aufnahme eines externen und transportablen Datenträgers als Speichermedium zur Aufzeichnung von Daten und Informationen und mit automatischen Steuer- und Rückmeldeeinrichtungen zum Verstellen der Stellglieder anhand der aufgezeichneten Daten und zum Rückmelden deren Positionswerte.

Es sind Datenübertragungssysteme an Druckmaschinen bekannt, die eine Abspeicherung der Einstelldaten einer Vielzahl von Stellgliedern diverser Maschinenfunktionen für Wiederholaufträge ermöglichen, um durch entsprechende Voreinstellung den Druckprozeß und insbesondere das Druckergebnis schneller zu optimieren und dadurch Makulaturanfall zu reduzieren.

Neben der Verwendung von Lochstreifen und Disketten zur Aufzeichnung der auftragsbezogenen Daten sind bei namhaften Druckmaschinenherstellern insbesondere Kassettenlaufwerke mit Magnetbändern zur Datenspeicherung gebräuchlich. Letztere kommen auch in der unter dem Namen "RCI" bekannt gewordenen Farbregelanlage der Firma MAN- Roland Druckmaschinen AG, 6050 Offenbach, bei dem unter dem Namen "Unimatic C3" bekannt gewordenen Farb - Fernsteuersystem der Firma Miller-Johannisberg Druckmaschinen GmbH, 6200 Wiesbaden, sowie bei dem unter dem Namen "Varicontroll" bekannt gewordenen Farbfernsteuersystem der Firma VEB Polygraph Druckmaschinenwerk Planeta, 7050 Leipzig, DDR,zur Anwendung. Bei diesen werden für Wiederholungsaufträge alle Farbwerksdaten, d.h. die Farbmesser- und Duktorstellungen aller Druckwerke, in einem anlageinternen Speicher zwischengespeichert und dann auf Abruf auf einem Magnetband aufgezeichnet. Noch während des Fortdrucks des laufenden Druckauftrages können diese Daten in die Druckmaschine eingegeben und unmittelbar nach dessen Beendigung durch entsprechenden Steuerbefehl die Farbzonen und der Duktor an allen Farbwerken der Druckmaschine automatisch für den Wiederholauftrag eingestellt werden.

Allen zuvor genannten Systemen haftet der gemeinsame Nachteil an, daß pro Druckauftrag eine Magnetbandkassette beschrieben wird, was sich als recht kostenintensive Methode herausgestellt hat, und insbesondere bei großen Druckereien mit einer Vielzahl von Druckmaschinen und unterschiedlicher Auflagenstruktur mit der Zeit zu einer unübersehbaren Anzahl von Magnetbandkassetten führt. Diese müssen für einen schnellen Zugriff archiviert werden, was neben einem erhöhten Platzbedarf auch zusätzliche Kosten erfordert. Darüber hinaus muß die voreinzustellende Druckmaschine identisch sein mit der, an der die Auftragsdaten aufgezeichnet wurden, was eine Übertragbarkeit eines Auftrages auf eine andere Druckmaschine unterschiedlichen Typs, Formats und/oder Bauart ausschließt.

Demgegenüber bietet die unter dem Namen "Heidelberg CPC I" bekannt gewordene elektronische Kontroll- und Steuertechnik der Heidelberger Druckmaschinen AG, 6900 Heidelberg, Kurfürsten-Anlage 52-60, bereits den Vorteil, daß die Auftragsdaten der verwendeten Magnetbandkassetten für die Voreinstellung des Wiederholauftrages auch auf andere Druckmaschinen übertragbar sind, d.h. die Druckmaschine des Erstauftrages mit der des Wiederholauftrages nicht identisch sein muß.

Ausgehend von diesem Stand der Technik liegt der Erfindung die Aufgabe zugrunde, ein Datenübertragungssystem für eine Druckmaschine zu schaffen, das unter Ausnutzung der vorhandenen Speicherkapazität des Speichermediums völlig maschinenunabhängig sowohl das Aufzeichnen als auch wiederholte Einlesen von Farbwerksdaten von und in verschiedene Druckmaschinen ermöglicht, und das durch schnellen und datengeschützten Abruf eine große Benutzerfreundlichkeit aufweist.

Erfindungsgemäß wird diese Aufgabe dadurch gelöst, daß der externe Datenträger als Sammel-Auftragsspeicher zur normierten Aufzeichnung und Wiedergabe der Daten und Informationen einer Vielzahl von Druckaufträgen verschiedener Druckmaschinen unterschiedlicher Arten und Typen ausgebildet ist, und daß ein von dem elektronischen Rechnersystem über eine Steuerlogik beeinflußbarer, die Zuordnung und Richtung des Datenflusses von und zum Sammel- Auftragsspeicher lenkender Datenverteiler vorgesehen ist, wobei je nach Ansteuerung des Datenverteilers ein allseitiger und richtungsunabhängiger Datenverkehr zwischen einzelnen oder mehreren Systemkomponenten möglich ist.

Diese Systemanordnung gewährleistet sowohl eine schnellstmögliche Speicherung der auftragsspezifischen Daten von verschiedenen Druckaufträgen und verschiedenen Druckmaschinen als auch einen sicheren Rückgriff auf dieselben in kürzester Zeit, wobei durch die Verwendung des ohnehin vorhandenen und bisher nicht genutzten Magnetbandteiles keine zusätzlichen Speicherkosten entstehen, dieselben stattdessen auf einen Bruchteil gesenkt werden. Von Vorteil ist außerdem die Anwendbarkeit des Systems auf unterschiedliche Druckmaschinentypen und -bauarten und die Möglichkeit der Verarbeitung von Leer- , Einfach- sowie Sammel-Auftragskassetten.

In vorteilhafter Ausgestaltung der Erfindung ist der Datenverteiler Bestandteil des elektronischen Rechnersystems, wodurch die minimalen zusätzlichen Anlagekosten vernachlässigbar sind.

Soll das Datenübertragungssystem an Druckmaschinen mit bereits vorhandenen elektronischen Kontroll- und Steuerzentren zur Anwendung kommen, empfiehlt es sich in Weiterbildung des Erfindungsgedankens, daß der Datenverteiler als nachrüstbare Zusatzeinrichtung ausgebildet und zwischen dem elektronischen Rechnersystem und der Datenaufzeichnungs- und Wiedergabevorrichtung über eine Schnittstelle eingeschaltet ist.

In diesem Fall hat es sich als Vorteil erwiesen, daß der Datenverteiler mit eigener Dateneingabeeinrichtung und Anzeige ausgestattet ist.

Eine besonders in die Zukunft weisende Weiterführung des Erfindungsgedankens wird darin gesehen, daß die Dateneingabeeinrichtung als automatischer bar-code Leser ausgebildet ist, wobei der die erforderlichen Informationen enthaltende Code direkt auf einer Druckvorlage angeordnet ist. Hierdurch läßt sich die manuell eingebbare Auftragserkennung automatisieren, was eine Zeitersparnis bringt und Fehlerquellen bei der Eingabe ausschließt.

Eine besonders zweckmäßige Ausführung des Datenübertragungssystems besteht darin, daß der Datenverteiler mit einer von dem elektronischen Rechnersystem gesteuerten und der Steuerelektronik beeinflußbaren elektronischen Weiche versehen ist, die in einer Normalstellung zur elektronischen Verbindung der Datenaufzeichnungs- und Wiedergabevorrichtung mit dem elektronischen Rechnersystem für einen beidseitigen Datentransfer zwischen dem Sammel-Auftragsspeicher und den Steuer- und Rückmeldeeinrichtungen vorgesehen ist und im Bedarfsfalle in einer ersten Koppelstellung den Datentransfer von der Dateneingabeeinrichtung zum Rechnersystem und von diesem zur Anzeige sicherstellt und im Bedarfsfalle in einer zweiten Koppelstellung die Dateneingabeeinrichtung und Anzeige zum Datentransfer mit der Datenaufzeichnungs- und Wiedergabeeinrichtung zusammenschaltet.

Zur Sicherstellung der Auftragsdaten ist eine Dupliziereinrichtung zum Vervielfältigen der Daten und Informationen des Sammel-Auftragsspeichers vorgesehen, wodurch neben dem Abnutzung und Verschleiß unterliegenden Arbeitsexemplar des Sammel-Auftragsspeichers ein zusätzliches Archivierungsexemplar vom Bediener der Druckmaschine in kürzester Zeit einfach und kostengünstig erstellt werden kann, ohne dabei auf Fremdleistungen angewiesen zu sein.

Gemäß dem Kennzeichen des Patentanspruches 9 wird als Sammel-Auftragsspeicher eine formatierte Magnetbandkassette verwendet, wobei die Datenaufzeichnungs- und Wiedergabeeinrichtung sowie die Dupliziereinrichtung als Kassettenlaufwerk ausgebildet sind, und die Daten und Informationen in digitaler Form gespeichert werden. Diese Anordnung weist den Vorteil auf, daß die bestehenden Kassettenlaufwerke an vorhandenen Steuer- und Kontrollzentren weiterhin ausgenutzt werden können, wodurch die Kosten so gering wie möglich gehalten werden. Hierzu trägt auch die digitale Form der Speicherdaten bei, weil sich dadurch ein Maximum an Informationen auf kleinstem Speicherraum unterbringen läßt.

Dem Zwecke der Automatisierung dient ebenfalls die sinnvolle Fortbildung des Erfindungsgedankens, daß der Datenverteiler über das elektronische Rechnersystem beim Einlegen einer Magnetbandkassette automatisch aktivierbar ist. Diese Anordnung sichert einerseits befehlsunabhängig die richtige Weichenstellung und andererseits erkennt das Rechnersystem aufgrund des eingegebenen Codes von alleine, ob die eingelegte Magnetbandkassette eine Leerkassette, eine EinzelAuftragskassette oder eine Sammel-Auftragskassette ist.

Zwecks Zwischenspeicherung der Auftragsdaten ist es vorteilhaft, daß der Datenverteiler mit einem eigenen Speicher ausgestattet ist.

Um sich einen gezielten und schnellen Zugriff zu den abgespeicherten Daten zu sichern und aus der Vielzahl der abgespeicherten Druckaufträge einen bestimmten gezielt auffinden zu können, ist der Speicherplatz des Sammel-Auftragsspeichers mit fester Zuordnung unterteilt in einen Speicher-Erkennungsbereich, einen Auftrags-Datenbereich und einen Auftrags-Stellwertbereich.

Das Datenübertragungssystem wird in vorteilhafter Weise insbesondere zur Voreinstellung von Stellgliedern der Farb- und/oder Feuchtgebung und/oder des Registers angewandt.

Weitere Merkmale und erfindungswesentliche Einzelheiten sowie die daraus resultierenden Vorteile ergeben sich aus den Patentansprüchen 8, 10 und 14 sowie aus der nachfolgenden Beschreibung eines Ausführungsbeispieles anhand der Zeichnungen.

Es zeigt:

Fig. 1    eine stark schematisierte Darstellung eines Datenübertragungssystems nach der Erfindung in Form eines Blockschaltbildes und

Fig. 2    detailliert einen Schaltungsauszug aus Fig. 1. mit Darstellung der elektronischen Weiche.

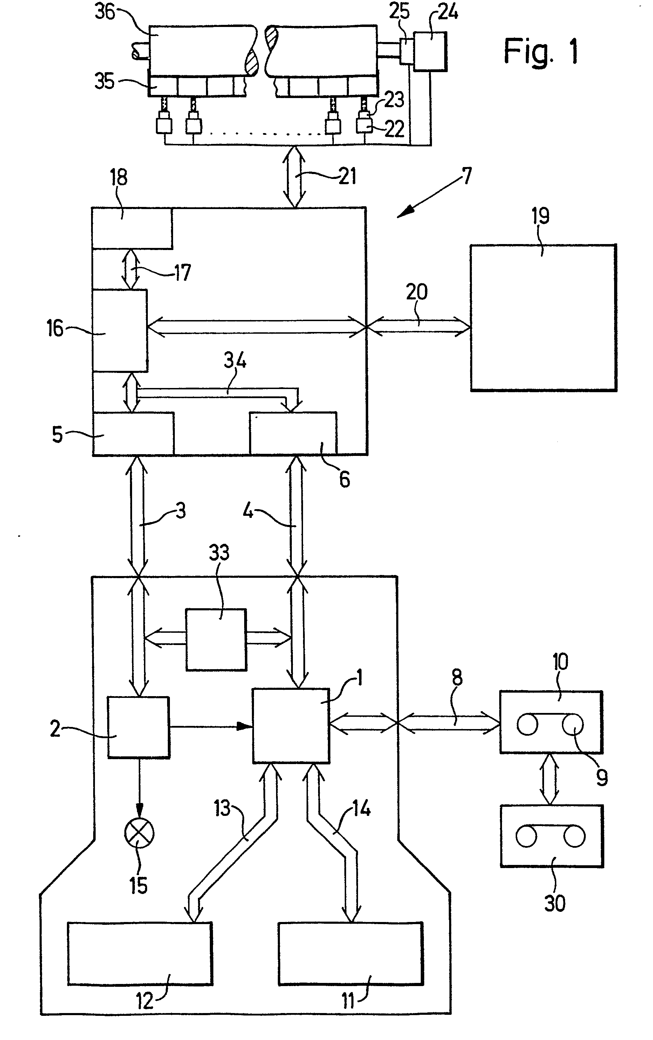

Gemäß Figur 1 wird das Kernstück des Datenübertragungssystems von einem Datenverteiler 1 gebildet, dem eine Steuerlogik 2 zugeordnet ist. Datenverteiler 1 und Steuerlogik 2 sind über je einen Interface-Bus 3 und 4 an Interface 5 bzw. 6 angeschlossen, die die Trennstelle zu einem elektronischen Rechnersystem 7 bilden, das in Form eines Mikrocomputersystems realisiert ist. Die Verbindung hierzu erfolgt über einen Datenbus 34. Die Zusammenschaltung zwischen Datenverteiler 1 mit Steuerlogik 2 und dem Mikrocomputersystem 7 kann auch über eine serielle oder parallele Schnittstelle mit zugehörigen Steuerleitungen erfolgen.

Der Datenverteiler 1 steht außerdem über einen Datenbus 8 mit einer Datenaufzeichnungs- und Wiedergabevorrichtung 9 in Verbindung, die ihrerseits mit einer Dupliziereinrichtung 30 gekoppelt ist. Datenaufzeichnungs- und Wiedergabevorrichtung 9 sowie Dupliziereinrichtung 30 sind im vorliegenden Ausführungsbeispiel als Kassettenlaufwerk zur Aufnahme eines transportablen Speichermediums ausgebildet. Hierzu wird eine Magnetbandkassette 10 verwendet, die als Sammel-Auftragsspeicher zur Aufnahme normierter Daten und Stellwerte einer Vielzahl von Druckaufträgen dient, die auch in verschiedenen Druckmaschinen differenter Bauart, z.B. unterschiedlichen Formats, gewonnen werden können. Selbstverständlich können auch andere Speicherformen, wie z.B. Magnetkartenspeicher mit Magnetkarten als Speichermedium zur Anwendung kommen.

Dem Datenverteiler 1 kann hilfsweise ein eigener Arbeitsspeicher 33 zugeordnet sein, der dann vorzugsweise zwischen die Interface-Busse 3 und 4 zwischengeschaltet wird. Die Daten- und Befehlseingabe erfolgt über eine mit dem Datenverteiler 1 gekoppelte Dateneingabeeinrichtung 11, die als - wahlweise auch frei programmierbare-Tastatur ausgebildet ist. Stattdessen kann als Dateneingabeeinrichtung auch ein bar-code Leser 31 vorgesehen werden; in diesem Fall muß der die erforderlichen Informationen aufweisende Code direkt in der Druckvorlage vorhanden sein. Dies kann derart erfolgen, daß z.B. ein Strich-Code bereits bei der Herstellung der Druckplatte auf dieselbe aufkopiert wird.

Eine eigene Anzeige 12 des Datenverteilers 1 erlaubt die Anzeige von Auftragskenndaten, wie z.B. Auftragsdatum, Auftragsnummer usw.. Tastatur 11 und Anzeige 12 sind vorzugsweise alphanumerisch ausgebildet. Stattdessen ist auch eine Anzeige 12 in graphischer Form denkbar. Verbindende Datenbusse 13 und 14 erlauben einen Datentransfer von und zum Mikrocomputersystem 7 und Kassettenlaufwerk 9. Zur direkten Funktionskontrolle der Steuerlogik 2 und somit zur indirekten Überwachung des Schaltzustandes des Datenverteilers 1 ist eine an die Steuerlogik 2 angeschlossene optische oder akustische Kontrolleinrichtung vorgesehen, die in Fig. 1 der Einfachheit halber als Kontrollampe angedeutet ist. Ein Protokolldrucker 32 erlaubt die visuelle Aufzeichnung von Stellwertdaten in Form eines Stellwert-Protokolls.

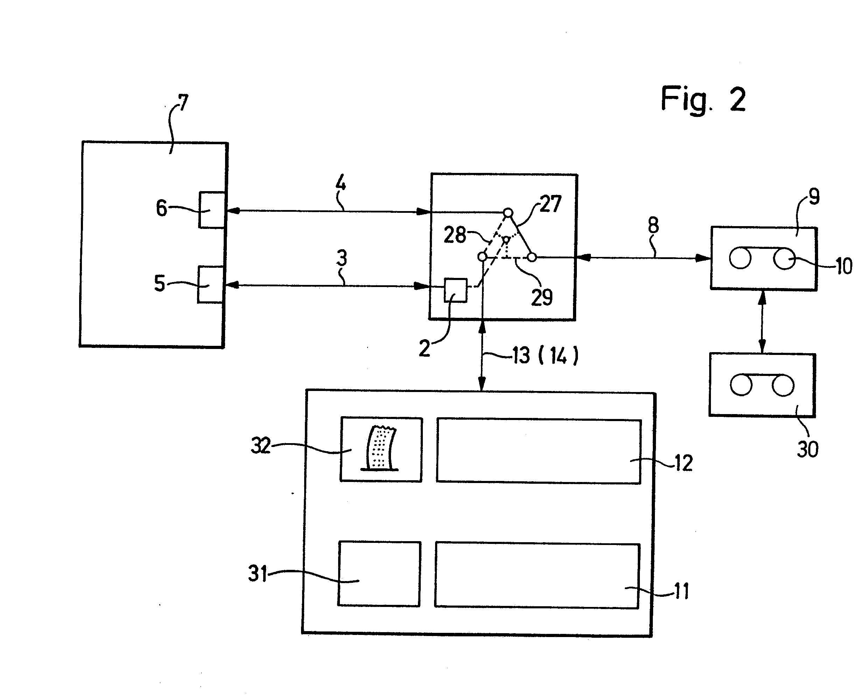

Kernstück des Mikrocomputersystems 7 ist ein Mikroprozessor 16, kurz CPU genannt, dem über einen Datenbus 17 ein Arbeitsspeicher 18 zugeordnet ist. Zusätzlich ist ein Istwert- und Sollwertspeicher 19 in Form eines gepufferten Festwertspeichers über einen Datenbus 20 mit der CPU 16 gekoppelt. Ein Systembus 21 führt von dem Mikrocomputersystem 7 zu automatischen Steuer- und Rückmeldeeinrichtungen 22 bis 25 von Farbzonenstellgliedern 35 und Farbduktoren 36 sämtlicher Druckwerke der Maschine. Wie in Figur 2 dargestellt, ist der Datenverteiler 1 mit einer elektronischen Weiche 26 ausgestattet, die neben einer Normalstellung 27 in eine erste und zweite Koppelstellung 28 und 29 gefahren werden kann.

Je nach Weichenstellung können dabei folgende Datenwege über die Steuerlogik 2 eingestellt werden:

1. Normalstellung 27:
   Mikrocomputersystem 7 ---- Datenaufzeichnungs- und Wiedergabevorrichtung 9

2.  Erste Koppelstellung 28:

    Tastatur 11             ----    Mikrocomputersystem 7

    Anzeige  12            ----

3.  Zweite Koppelstellung 29:

    Tastatur 11             ----    Datenaufzeichnungs- und

    Anzeige  12            ----    Wiedergabevorrichtung 9

Die Wirkungs- und Funktionsweise des zuvor beschriebenen Datenübertragungssystems nach der Erfindung wird nachfolgend näher erläutert.

Die elektronische Weiche 26 verbindet in ihrer Normalstellung 27 das Mikrocomputersystem 7 mit der im Kassettenlaufwerk 9 eingelegten Magnetbandkassette 10.

Über das Interface 5 kann das Mikrocomputersystem 7 Einfluß auf die Steuerlogik 2 nehmen, welche ihrerseits auf automatischen Steuerbefehl des Mikrocomputersystems 7 den Datenverteiler 1 von seiner Normalstellung 27 in eine seiner Koppelstellungen 28 oder 29 umschaltet. Jede Änderung im Datenübertragungssystem, z.B. Umschaltung der elektronischen Weiche 26 im Datenverteiler 1 oder Herausnehmen bzw. Einlegen einer Magnetbandkassette 10, wird von der Steuerlogik 3 überwacht und an Interface 5 quittiert. Dadurch ist es möglich, einen Defekt im Datenübertragungssystem , unsachgemäße Bedienung oder das Fehlen der Dateneingabevorrichtung infolge Nichtdurchschaltung der Tastatur 11 zum Mikrocomputersystem 7 anhand der Kontrollampe 15 noch vor Durchführung eines eigentlichen Datentransfers festzustellen.

Generell können mit dem Datenübertragungssystem folgende Magnetbandkassetten 10 verarbeitet werden:

1.  eine unbeschriebene, leere Magnetbandkassette oder

2.  eine Einfach-Auftragskassette oder

3. eine Sammel-Auftragskassette.

1. Aufzeichnung der Maschineneinstellwerte nach Beendigung eines Druckauftrages

Nach Beendigung eines Druckauftrages müssen die vom Bedienungspersonal der Druckmaschine als optimal erachteten Maschineneinstellwerte für einen Wiederholauftrag aufgezeichnet werden, damit man bei einer späteren Voreinstellung der Druckmaschine gleiche Einstellungen der Stellglieder erhält. Die von den Rückmeldeeinrichtungen 23 und 25 über den Datenbus 21 an das Mikrocomputersystem 7 rückgemeldeten Positions-Istwerte der Stellglieder werden nach Einleitung eines entsprechenden Steuerbefehls mittels der Tastatur 11 zuerst im Istwert- und Sollwertspeicher 19 abgespeichert.

Es besteht nun die Möglichkeit, eine unbeschriebene, leere Magnetbandkassette 10 oder stattdessen bereits eine zur Sammel-Auftragskassette deklarierte Magnetbandkassette 10 in das Kassettenlaufwerk 9 einzulegen. Jede leere Magnetbandkassette 10 wird nach dem Einlegen und Eingeben des Befehls "Einlesen" zur Sammel-Auftragskassette deklariert und als solche mit einem Code gekennzeichnet, der bei einer späteren Wiederverwendung zu deren Identifizierung als Sammel-Auftragskassette 10 dient.

Anschließend wird in die codierte Sammel-Auftragskassette 10 ein Inhaltsverzeichnis eingelesen, in dem unter anderem die jeweilige Anzahl der auf dem Magnetband aufgezeichneten Aufträge, Auftragsnummer, -Name und -Datum sowie Anzahl, Art und Reihenfolge der für den jeweiligen Druckauftrag verwendeten Farben abgespeichert sind. Bereits mit Aufträgen versehene Sammel-Auftragskassetten 10 werden nach der Befehlseingabe "Einlesen" automatisch als solche erkannt. Bei diesen bedarf es deshalb nur einer entsprechenden Erweiterung des Inhaltsverzeichnisses.

Vor dem Aufzeichnen der im Istwert- und Sollwertspeicher 19 abgespeicherten Maschineneinstellwerte muß der Bediener über die Tastatur 11 die zuvor erwähnten Kenndaten des momentan in der Maschine bearbeiteten Druckauftrages eingeben, z.B. Datum und Namen dieses Auftrags. Die Zuweisung einer fortlaufenden Auftragsnummer erfolgt automatisch über das Mikrocomputersystem 7. Die vom Bediener eingegebenen Druckauftrags-Kenndaten kann er sich in der Anzeige 12 darstellen lassen. Durch Einleitung eines Aufzeichnungsbefehls werden nun die gespeicherten Maschineneinstellwerte über das Mikrocomputersystem 7 - in dem die Normierung dieser Werte erfolgt - direkt auf die Sammel-Auftragskassette 9 übertragen. Dabei hat der Bediener die Möglichkeit, neben der Aufzeichnung aller Farben dieses Druckauftrages auch eine Farbauswahl über die Tastatur 11 vorzunehmen, d.h. sich nur Maschineneinstellwerte von einzelnen Farben aufzeichnen zu lassen. Zusätzlich ist die Ausgabe eines Stellwert-Protokolls über den Protokolldrucker 32 möglich.

Bei Einlegen einer Sammel-Auftragskassette 10 ist die Funktionsweise des Datenübertragungssystems identisch mit der Ausnahme, daß diese mittels des auf ihr enthaltenen Codes vom Mikrocomputersystem 7 automatisch als Sammel-Auftragskassette 9 identifiziert wird. Natürlich ist das Inhaltsverzeichnis für jeden neu abzuspeichernden Druckauftrag stets zu ergänzen.

2. Wiedergabe und Einlesen eines Auftrages von einer Sammel -Auftragskassette 10 in die Druckmaschine

Für einen Wiederholauftrag sind die Maschineneinstellwerte eines Druckauftrages von der Sammel-Auftragskassette 10 zu lesen. Nach dem Einlegen der Sammel-Auftragskassette 10 wird dieselbe vom Mikrocomputersystem 7 als solche automatisch identifiziert. Über Interface 5, Interface-Bus 3 und die Steuerlogik 2 wird die elektronische Weiche 26 des Datenverteilers 1 in ihre erste Koppelstellung 28 umgeschaltet, in der die Tastatur 11 und die Anzeige 12 auf das Mikrocomputersystem 7 gelegt sind. In der Anzeige 12 erscheint nun eine Menü-Liste zur Befehlsauswahl. Der Bediener quittiert den Befehl "Auftrag lesen", worauf ihm in der Anzeige 12 das Inhaltsverzeichnis der Magnetbandkassette 9 auszugsweise angezeigt wird. Der Bediener hat nun die Möglichkeit, sich durch entsprechende Befehlseingaben mittels der Tastatur 11 das Inhaltsverzeichnis in der Anzeige 12 darstellen zu lassen. Stattdessen ist es auch möglich, daß nach Eingabe der Auftragsnummer der gewünschte Auftrag über das Mikrocomputersystem 7 automatisch herausgesucht wird.

Sobald der Auftrag aufgefunden worden ist, erscheinen die Auftragskenndaten in der Anzeige 12. Der Bediener kann nun mittels Befehlseingabe alle Farben dieses Druckauftrags einlesen oder stattdessen, wie bei der Aufzeichnung, eine bestimmte Farbauswahl vornehmen. Auf Wunsch kann über den Protokolldrucker 32 wiederum ein Stellwert-Protokoll ausgedruckt werden.

Nach Wiedergabe und Einlesen der normierten Maschineneinstellwerte gelangen diese über Zwischenspeicherung im Arbeitsspeicher 18 und Entnormierung im Mikroprozessor 16 durch Eingabe eines Speicherbefehls in den Istwert- und Sollwertspeicher 19. Durch Auslösung eines Steuerbefehls werden die Stellglieder über die Steuereinrichtungen 22 und 24 automatisch in die gewünschten Positionen verfahren.

3. Suchen eines Auftrags auf der Sammel-Auftragskassette 9

Durch Betätigung entsprechender Befehlstasten an der Tastatur 11 kann sich der Bediener das Inhaltsverzeichnis in der Anzeige 12 beispielsweise schrittweise darstellen lassen, d.h. er kann auf Befehl im Inhaltsverzeichnis sozusagen elektronisch vor- oder zurückblättern, bis er den gesuchten Auftrag gefunden hat. Die darauffolgende Wiedergabe und das Einlesen der Maschineneinstellwerte erfolgen wie zuvor beschrieben. Ebenso ist natürlich auch ein Suchen eines Auftrages nach einer eingegebenen Zeichenfolge denkbar.

Selbstverständlich ist die Erfindung nicht auf die in der Beschreibung niedergelegten und in den Figuren dargestellten Ausführungsformen beschränkt. Es versteht sich von selbst, daß zahlreiche bauliche Abwandlungen, insbesondere die Anwendung auf dem Markt erhältlicher, äquivalenter sowohl elektromechanischer als auch elektronischer Bausteine, im Rahmen der Erfindung liegen.

TEILELISTE

| 1 | Datenverteiler |
|---|---|
| 2 | Steuerlogik |
| 3,4 | Interface-Bus |
| 5,6 | Interface |
| 7 | Elektronisches Rechnersystem, (Mikrocomputersystem) |
| 8 | Datenbus |
| 9 | Datenaufzeichnungs-u. Wiedergabevorrichtung (Kassettenlaufwerk) |
| 10 | Magnetbandkassette |
| 11 | manuelle Dateneingabeeinrichtung (Tastatur) |
| 12 | Anzeige |
| 13,14 | Datenbus |
| 15 | Kontrollampe |
| 16 | Mikroprozessor (CPU) |
| 17 | Datenbus |
| 18 | Arbeitsspeicher |
| 19 | Istwert- und Sollwertspeicher |
| 20 | Datenbus |
| 21 | Systembus |
| 22 | Steuereinrichtung ⎫ Farbzonenstellglied |
| 23 | Rückmeldeeinrichtung ⎭ |
| 24 | Steuereinrichtung ⎫ Farbduktor |
| 25 | Rückmeldeeinrichtung ⎭ |
| 26 | Elektronische Weiche |
| 27 | Normalstellung |
| 28 | Erste Koppelstellung |
| 29 | Zweite Koppelstellung |
| 30 | Dupliziereinrichtung |
| 31 | automatische Dateneingabeeinrichtung (bar-code Leser) |
| 32 | Protokolldrucker |
| 33 | Speicher für Datenverteiler |
| 34 | Datenbus |
| 35 | Farbzonenstellglied |
| 36 | Duktor |

Titel:"Datenübertragungssystem zur Voreinstellung von
       Stellgliedern an Druckmaschinen"

PATENTANSPRÜCHE

1. Datenübertragungssystem zur Voreinstellung von Stellgliedern an Druckmaschinen, mit zumindest einem elektronischen Rechnersystem und zumindest einem internen
   Speicher sowie einer Datenaufzeichnungs- und Wiedergabevorrichtung zur Aufnahme eines externen und transportablen Datenträgers als Speichermedium zur Aufzeichnung von Daten und Informationen und mit automatischen
   Steuer- und Rückmeldeeinrichtungen zum Verstellen der
   Stellglieder anhand der aufgezeichneten Daten und zum
   Rückmelden deren Positionswerte,
   d a d u r c h   g e k e n n z e i c h n e t,
   daß der externe Datenträger als Sammel-Auftragsspeicher
   (10) zur normierten Aufzeichnung und Wiedergabe der
   Daten und Informationen einer Vielzahl von Druckaufträgen verschiedener Druckmaschinen unterschiedlicher
   Arten und Typen ausgebildet ist, und
   daß ein von dem elektronischen Rechnersystem (7) über
   eine Steuerlogik (2) beeinflußbarer, die Zuordnung und
   Richtung des Datenflusses von und zum Sammel-Auftragsspeicher (10) lenkender Datenverteiler (1) vorgesehen
   ist,
   wobei je nach Ansteuerung des Datenverteilers (1) ein
   allseitiger und richtungsunabhängiger Datenverkehr
   zwischen einzelnen oder mehreren Systemkomponenten
   möglich ist.

2. Datenübertragungssystem nach Anspruch 1,
   d a d u r c h   g e k e n n z e i c h n e t,
   daß der Datenverteiler (1) Bestandteil des elektronischen Rechnersystems (7) ist.

3.  Datenübertragungssystem nach Anspruch 1,
    d a d u r c h  g e k e n n z e i c h n e t,
    daß der Datenverteiler (1) als nachrüstbare Zusatzeinrichtung ausgebildet und zwischen dem elektronischen
    Rechnersystem (7) und der Datenaufzeichnungs- und
    Wiedergabevorrichtung (9) über eine Schnittstelle
    eingeschaltet ist.

4.  Datenübertragungssystem nach einem oder mehreren der
    vorangehenden Ansprüche,
    d a d u r c h  g e k e n n z e i c h n e t,
    daß der Datenverteiler (1) mit eigener Dateneingabeeinrichtung (11) und Anzeige (12) ausgestattet ist.

5.  Datenübertragungssystem nach einem oder mehreren der
    vorangehenden Ansprüche,
    d a d u r c h  g e k e n n z e i c h n e t,
    daß die Dateneingabeeinrichtung (11) und die Anzeige
    (12) alphanumerisch sind.

6.  Datenübertragungssystem nach einem oder mehreren der
    vorangehenden Ansprüche,
    d a d u r c h  g e k e n n z e i c h n e t,
    daß die Dateneingabeeinrichtung als automatischer
    bar-code Leser (31) ausgebildet ist, wobei der die
    erforderlichen Informationen enthaltende Code direkt
    auf einer Druckvorlage angeordnet ist.

7.  Datenübertragungssystem nach einem oder mehreren der
    vorangehenden Ansprüche,
    d a d u r c h  g e k e n n z e i c h n e t,
    daß der Datenverteiler (1) mit einer von dem elektronischen Rechnersystem (7) gesteuerten und der Steuerlogik (2) beeinflußbaren elektronischen Weiche (26)
    versehen ist, die in einer Normalstellung (27) zur elektronischen Verbindung der Datenaufzeichnungs- und Wiedergabevorrichtung (9) mit dem elektronischen Rechnersystem (7) für einen beidseitigen Datentransfer zwischen dem Sammel-Auftragsspeicher (10) und den Steuer- und Rückmeldeeinrichtungen (22-25) vorgesehen ist und im Bedarfsfalle in einer ersten Koppelstellung (28) den Datentransfer von der Dateneingabeeinrichtung (11) zum Rechnersystem (7) und von diesem zur Anzeige (12) sicherstellt und im Bedarfsfalle in einer zweiten Koppelstellung (29) die Dateneingabeeinrichtung (11) und Anzeige (12) zum Datentransfer mit der Datenaufzeichnungs- und Wiedergabeeinrichtung (9) zusammenschaltet.

8. Datenübertragungssystem nach einem oder mehreren der vorangehenden Ansprüche,
   d a d u r c h   g e k e n n z e i c h n e t,
   daß eine Dupliziereinrichtung (30) zum Vervielfältigen der Daten und Informationen des Sammel-Auftragsspeichers (10) vorgesehen ist.

9. Datenübertragungssystem nach einem oder mehreren der vorangehenden Ansprüche,
   d a d u r c h   g e k e n n z e i c h n e t,
   daß als Sammel-Auftragsspeicher (10) eine formatierte Magnetbandkassette verwendet wird, wobei die Datenaufzeichnungs- und Wiedergabeeinrichtung (9) sowie die Dupliziereinrichtung (30) als Kassettenlaufwerk ausgebildet sind, und die Daten und Informationen in digitaler Form gespeichert werden.

10. Datenübertragungssystem nach einem oder mehreren der vorangehenden Ansprüche,
    d a d u r c h   g e k e n n z e i c h n e t,
    daß der Datenverteiler (1) mit einem Protokolldrucker (32) zum Ausdrucken der eingegebenen und/oder angezeigten und/oder aufgezeichneten und/oder wiedergegebenen Daten versehen ist.

11. Datenübertragungssystem nach einem oder mehreren der vorangehenden Ansprüche,
d a d u r c h   g e k e n n z e i c h n e t ,
daß der Datenverteiler (1) über das elektronische Rechnersystem (7) beim Einlegen einer Magnetbandkassette automatisch aktivierbar ist.

12. Datenübertragungssystem nach einem oder mehreren der vorangehenden Ansprüche,
d a d u r c h   g e k e n n z e i c h n e t ,
daß der Datenverteiler (1) mit einem eigenen Speicher (33) ausgestattet ist.

13. Datenübertragungssystem nach einem oder mehreren der vorangehenden Ansprüche,
d a d u r c h   g e k e n n z e i c h n e t ,
daß der Speicherplatz des Sammel-Auftragsspeichers (10) mit fester Zuordnung unterteilt ist in einen Speicher-Erkennungsbereich, einen Auftrags-Datenbereich und einen Auftrags-Stellwertbereich.

14. Datenübertragungssystem nach einem oder mehreren der vorangehenden Ansprüche,
d a d u r c h   g e k e n n z e i c h n e t ,
daß die formatierte Magnetbandkassette (10) zur automatischen Identifizierung durch das elektronische Rechnersystem (7) mit einem Code versehen ist, der sie als Sammel-Auftragsspeicher kennzeichnet,
und daß der Beginn des Speicherplatzes vor den eigentlichen druckspezifischen Stellwerten mit einem Inhaltsverzeichnis versehen ist, in dem alle auftragsbezogenen Kenndaten, insbesondere Auftrags-Nummer, -Name und -Datum sowie Art- und Reihenfolge der verwendeten Druckfarben angeordnet sind.

15. Datenübertragungssystem nach einem oder mehreren der vorangehenden Ansprüche,
d a d u r c h   g e k e n n z e i c h n e t ,
daß es insbesondere zur Voreinstellung von Stellgliedern der Farb- und/oder Feuchtgebung und/oder des Registers angewandt wird.

1/2

0158797

Fig. 1

Fig. 2